# FASCICULE DE BREVET EUROPEEN

(11) **EP 2 017 110 B1**
(45) Date de publication et mention de la délivrance du brevet: **01.09.2010**
(21) Numéro de dépôt: 08350003.3
(22) Date de dépôt: 26.06.2008
(51) Int. Cl.: B60J 7/14, B60J 7/12, B60J 7/20

(54) **Toit rétractable avec sous ensemble**
Faltdach bestehend aus Modulen
Foldable roof comprising modules

(30) Priorité: 18.07.2007 FR 0705176
(43) Date de publication de la demande: 21.01.2009
(73) Titulaire: Heuliez, 79140 Cerizay (FR)
(72) Inventeur: Guillez, Jean-Marc, 79140 Cirières (FR)
(74) Mandataire: Tournel, Jean Louis

(56) Documents cités:
- EP-A- 0 844 125
- EP-A- 0 850 792
- WO-A-2007/000563

## Description

L'invention se rapporte à un toit rétractable.

Dans la conception du toit rétractable actuel, ce toit rétractable est souvent considéré comme un ensemble formant une pièce unique. Cette pièce unique est un ensemble de pièces assemblées sur une chaine de fabrication spécifique pour constituer un module de toit que l'on va ensuite acheminer vers les sites de montage du véhicule. Le module de toit est alors positionné sur le véhicule et fixé. On intitule souvent ce procédé par la dénomination anglaise « Plug &play ».

Comme on le sait, une partie de ce toit rétractable tels les moyens de manoeuvre sont invisibles car ils sont placés sous la ligne de caisse du véhicule. C'est au niveau de ces moyens de manoeuvre que se fixe le module sur la caisse du véhicule. Les moyens de manoeuvres sont déjà intégrés dans le module de toit.

On connait WO 2007/000563 un toit dont la partie supérieure est articulée sur une platine mobile par rapport à une autre platine. Aucun élément dans la description n'indique la manière de monter le toit sur le véhicule. Il en est de même pour les toits rétractables décrits dans les demandes de brevet EP 844125 ou EP850792 ou DE 10 2004 048142 ou DE 199 60 010.

Pour insérer notamment ces moyens de manoeuvre dans les zones d'accrochage, il faut tenir compte des formes et espaces libres disponibles.

La manière de présenter le module pour le positionner sur le châssis du véhicule est donc souvent complexe.

Pour ce faire on utilise des moyens de manutention complexe tels des robots.

On comprend donc que cela crée des contraintes car il faut minimiser l'espace dédié au toit pour laisser de la place dans le coffre.

Un des résultats que vise l'invention est, notamment, de limiter ces contraintes.

A cet effet, l'invention à pour objet un toit rétractable pour un véhicule selon les caractéristiques de la revendication 1.

L'invention sera bien comprise à l'aide de la description ci après faite à titre d'exemple non limitatif en regard du dessin qui représente :
FIG 1 : un toit selon l'invention en place sans le châssis et la carrosserie du véhicule.
FIG 2 : Le toit de la figure 1 en cours de déplacement.
FIG 3 Le toit des figures 1 ou 2 sans les éléments de toit
FIG 4 : Vue de dessus du toit de la figure 3
FIG 5 : Vue du toit en place couvrant l'habitacle sans les éléments de couverture.
FIG 6 : Vue de l'arrière du toit selon la figure 5
FIG 7 : Le toit de la figure 5 en cours de montage
FIG 8 : Vue de l'arrière du toit selon la figure 7.
FIG 9 : Les sous ensembles de motorisation/articulation
FIG 10 :Vue en gros plan de la zone de jonction entre la structure portant et un ensemble de motorisation.
FIG 11 : Une variante de toit ledit toit étant en place
FIG 12 : Le toit de la figure 11 en cours de rangement
FIG 13 : Le toit de la figure 11 à l'état rangé.
FIG 14 : Le toit des figures 11 à 13 en cours de montage

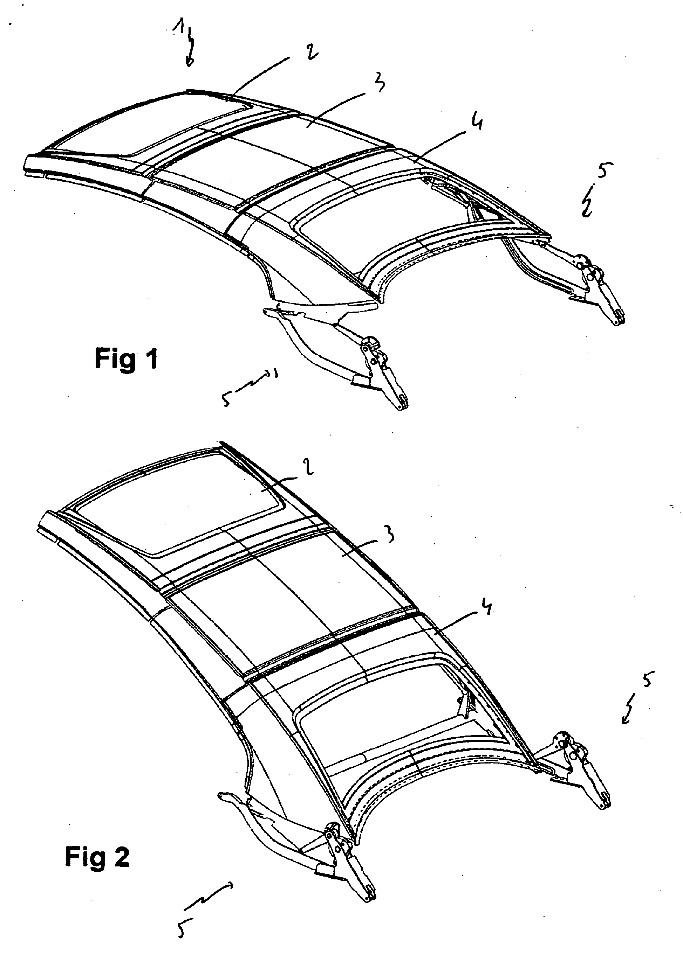

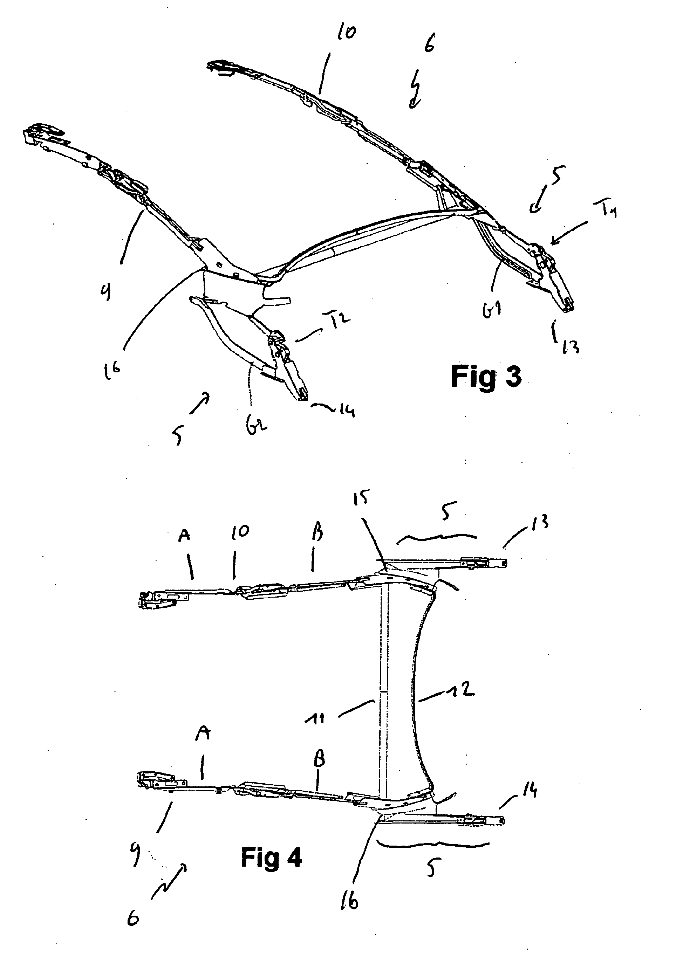

En se reportant au dessin figure 1 ou 2, on voit qu'un toit 1 escamotable comporte au moins un élément de toit 2,3, 4. Ici il comporte un élément de toit avant 2, un élément de toit central 3 et un élément de toit arrière 4. On voit sur ces deux figures, les moyens 5 de motorisation/articulation placés à l'arrière. Lorsqu'on retire (figures 3 à 8) ces éléments de toit ayant la forme d'un panneau courbe, on découvre dessous une structure 6 portante. Cette structure portante est ici représentée par deux bras 9, 10 réunis à l'arrière par au moins un élément transversal 11,12. Les bras 9,10 sont formés de deux tronçons A,B, le tronçon arrière B étant articulé sur l'élément transversal arrière. Le tronçon avant A est articulé sur le tronçon arrière B. Les spécificités techniques précitées ne limitent pas l'invention qui peut s'appliquer à tous types de toit rétractable.

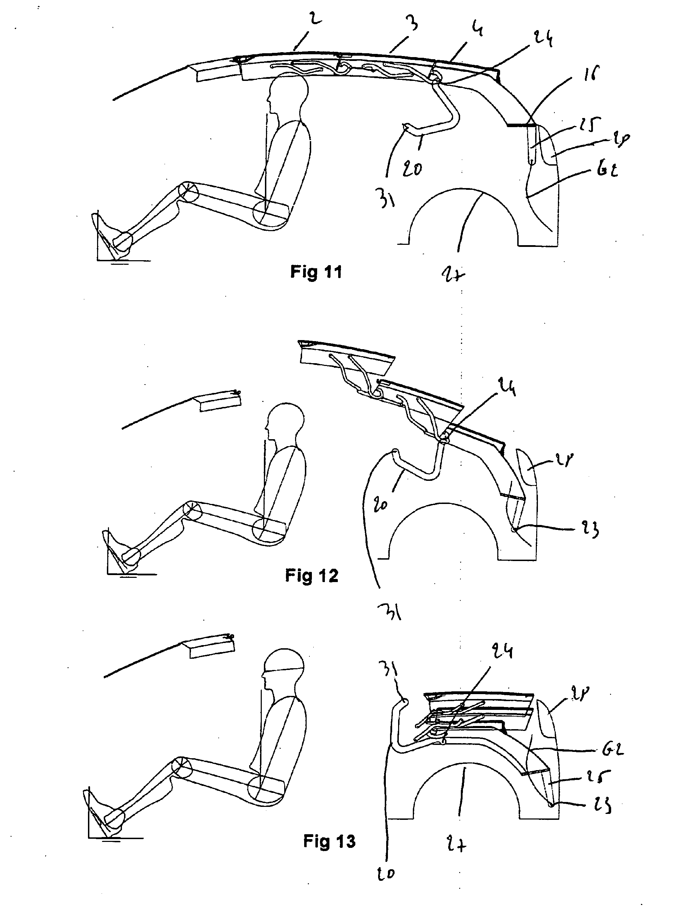

En position rangée les éléments de toit se superposent (figure 13) .

Donc, ce toit rétractable comprend une structure 6 portante manoeuvrée par des moyens 5 de motorisation/articulation localisés à l'arrière du toit. Ces moyens 5 permettent, lors du rangement, de déplacer le toit vers l'arrière et de l'abaisser.

Les moyens 5 de motorisation/articulation sont agencés en un sous ensemble droit et un sous ensemble gauche les dits sous ensembles comprenant des moyens 13,14 de fixation sur le véhicule et des platines 15 ,16 de réception pour la structure portante, ces platines étant mobile lors de la manoeuvre du toit.

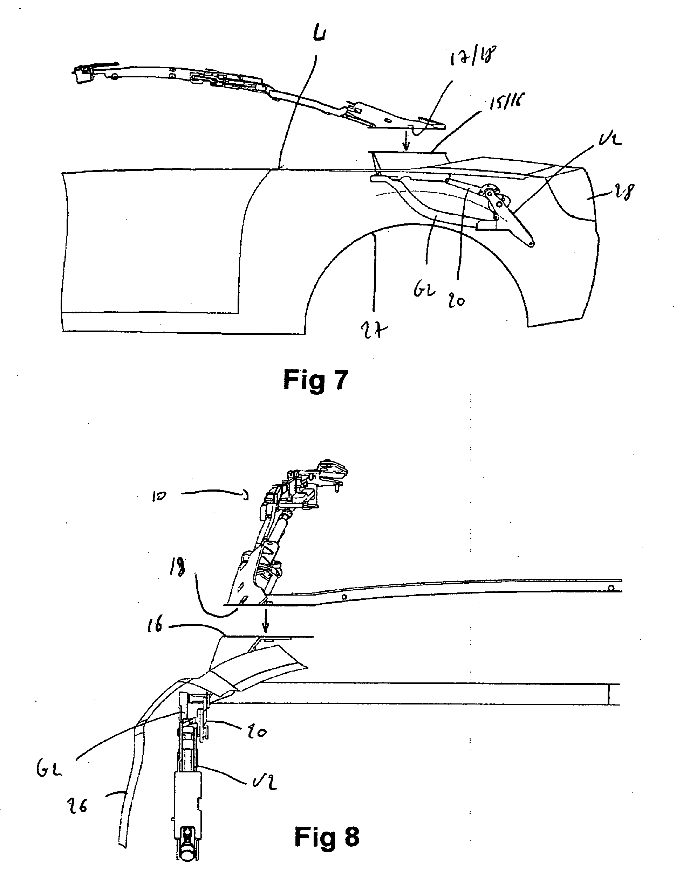

Ainsi, si on se rapporte aux figures 7 et 8, on fixe chaque sous ensemble sur le véhicule depuis l'intérieur du coffre 30 sur des parois de caisse situées sous les ailes arrières 26 puis on fixe la structure portante sur les platines 15,16 de réception qui se trouvent au voisinage et de préférence légèrement au dessus de la ligne de caisse L. Pour faciliter le montage, ces platines possèdent une surface de réception sensiblement horizontale.

La platine et le pied constitue, lorsqu'ils sont assemblés une seule pièce rigide. Avant assemblage des pieds sur les platines ont dispose de trois parties à savoir les deux sous ensembles de motorisation/articulation et la structure portante.

On comprend bien qu'il est simple de fixer préalablement les sous ensembles de motorisation/articulation sur la caisse du véhicule dans des zones difficilement accessibles tels que des cavités car ils sont peu encombrants et léger pour ensuite fixer la structure portante par un seul mouvement de descente de cette structure portante. La position des platines des sous ensembles à hauteur de la ligne de caisse évite des mouvements d'insertion complexes qui peuvent endommager la carrosserie ou les mécanismes.

Il est relativement simple d'introduire chacun de ces sous ensembles par un mouvement complexe puis par un simple mouvement vertical de poser la structure portante au lieu de manoeuvrer l'ensemble du toit qui est beaucoup plus lourd que les sous ensembles selon des mouvements complexes.

La structure portante présente un pied d'appui 17, 18 présentant des surfaces venant au contact de chaque platine mobile. Ce pied d'appui est fixé rigidement sur la platine de réception soit par rivets, boulons ou soudures. Il présente une surface d'appui complémentaire à la surface de la platine réception qui de préférence sont planes. Lors du montage, on vient poser le pied sur la platine et on fixe rigidement les deux éléments il ne s'agit pas d'une liaison articulée mais d'une liaison rigide.

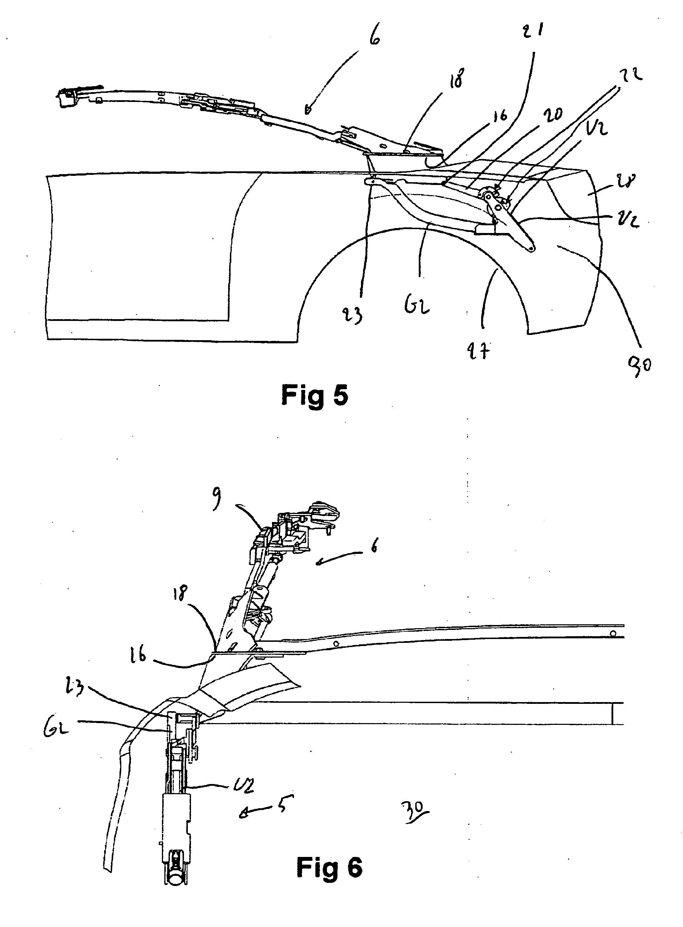

Le toit des figures 7 et 8 est présenté assemblé aux figures 5, 6.

Chaque moyen 5 de motorisation/articulation comprend en outre un actionneur V1, V2, une glissière G1, G2 dans laquelle coulisse un doigt 23 porté par la platine mobile et une transmission T1, T2 du mouvement de l'actionneur.

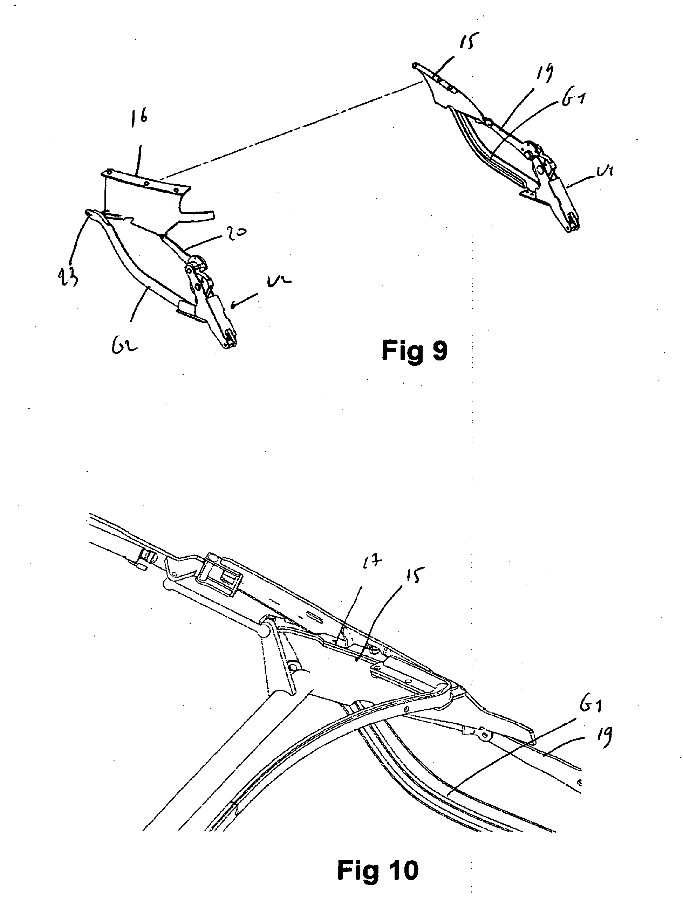

La transmission comprend une bielle 19,20 articulée avec l'élément 4 de toit arrière. Dans la version des figures 1 à 11, l'actionneur agit sur la bielle via des secteurs dentés 22 ou des biellettes. Toujours dans cette version l'extrémité avant de la bielle est articulée sur un axe 21 présenté par la platine mobile 15,16.

Dans la version des figures 11 et suivantes, la bielle 20 est articulée sur un axe 31 du châssis et sur un axe 24 de l'élément de toit arrière. La platine mobile 16 est par une patte 25 et un doigt 23 guidée dans la glissière globalement verticale. On notera que les éléments de ce sous ensemble sont inversés par rapport à la solution des figures 1 à 10, la bielle étant devant la glissière.

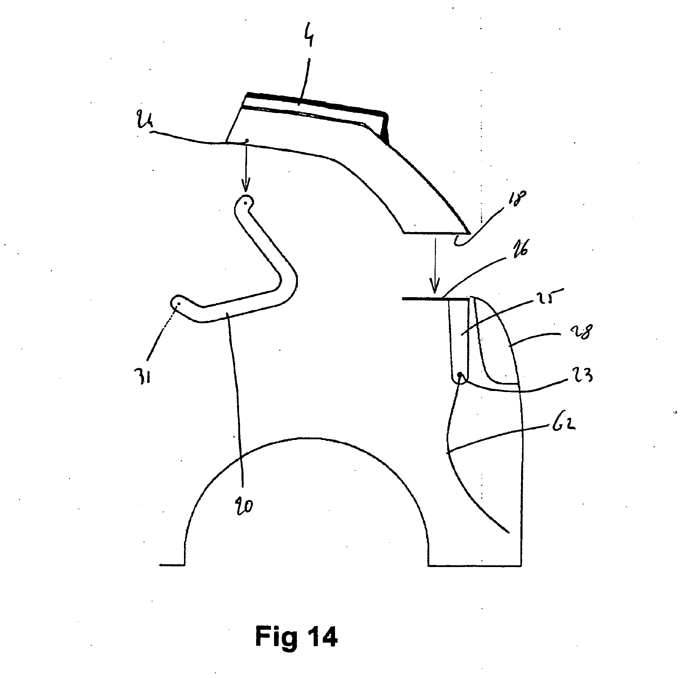

La figure 14 illustre le montage de la structure portante sur les sous ensembles déjà installés et donc le mouvement simple. Ici on raccorde le pied 18 à la platine 16 et la bielle 20 à l'axe 24 du toit. Dans toutes les figures, la bielle, l'actionneur, la glissière et les transmissions sont portés par un support commun. Cependant on pourrait envisager, dans une autre variante, que la glissière pouvait être indépendante de l'actionneur. Toujours dans cette autre variante, l'actionneur (non représenté) agit au moins indirectement sur la bielle. Dans cette autre variante qui est représentée aux figures 11 à 14, la glissière s'étend sensiblement verticalement. La glissière a au moins une courbure présentant une concavité tournée vers l'arrière ce qui permet au toit de descendre dans le coffre en contournant à la fois les feux arrières et le passage de roue.

Comme on le voit ces dispositions permettent de loger chaque sous ensemble de motorisation /articulation sous les ailes 26 arrières et au dessus d'une cloison 27 définissant le passage de roue. Ce sous ensemble est logé entre cette cloison 27 (passage de roue) et un feu arrière 28. Ce moyen 5 de motorisation/articulation est disposé dans une cavité 29 de la carrosserie sous l'aile arrière 26, la cavité étant située entre le sommet et l'arrière du passage de roue.

On utilise ainsi des espaces morts dont l'accès par le dessus n'est pas aisé voire impossible.

Comme cela a déjà été dit, on assemble un ensemble constitué par une structure portante et les éléments (2,3,4) de toit couvrant la structure portante et on fixe cet ensemble sur les sous ensembles de motorisation./articulation préalablement montés sur la caisse du véhicule.

En outre la forme et l'orientation des glissières permet d'imprimer au toit un mouvement défini dans l'espace tout en contournant des obstacles : dans le premier mode de réalisation (fig 1 à 10) la forme et l'orientation des glissières permettent de contourner la cloison de passage de roue et le couvercle de coffre fermé et dans le deuxième mode de réalisation ( fig 11 à 14) elles permettent de contourner le feu arrière et la cloison de passage de roue. Le premier mode de réalisation vise avantageusement un véhicule tricorps alors que le deuxième mode de réalisation vise un véhicule monocorps ou bicorps.

## Revendications

1. Toit rétractable pour un véhicule comprenant une structure (6) portante manoeuvrée par des moyens (5) de motorisation/articulation localisés à l'arrière du toit les dits moyens (5) de motorisation/articulation étant agencés en un sous ensemble droit et un sous ensemble gauche les dits sous ensembles comprenant des moyens (13,14) de fixation sur le véhicule et des platines (15,16) de réception pour la structure portante, ces platines étant mobile lors de la manoeuvre du toit entre une position couvrant l'habitacle et une position rangée, ce toit étant **caractérisé en ce que** sur les platines de réception est fixée rigidement la structure portante qui présente à cet effet un pied d'appui (17, 18) venant au contact de chaque platine mobile.

2. Toit rétractable selon la revendication 1 **caractérisé en ce que** les platines présentent une surface de réception et le pied d'appui présente une surface d'appui complémentaire à la surface de réception de la platine.

3. Toit rétractable selon la revendication 2 **caractérisé en ce que** les surfaces de réception sont sensiblement horizontales lors du montage de la structure portante.

4. Toit rétractable selon la revendication 1 ou 2 ou 3 **caractérisé en ce que** chaque moyen (5) de motorisation/articulation comprend en outre un actionneur (V1, V2), une glissière (G1, G2) dans laquelle coulisse un doigt (23) porté par la platine mobile et une transmission (T1, T2) de l'actionneur.

5. Toit rétractable selon la revendication 4 **caractérisé en ce que** la transmission comprend une bielle (19,20) articulée avec un élément de toit.

6. Toit rétractable selon la revendication 5 **caractérisé en ce que** l'extrémité avant de la bielle (19 ,20) est articulée sur un axe (21) présenté par la platine.

7. Toit rétractable selon l'une quelconque des revendications précédentes **caractérisé en ce que** le toit comprend au moins un élément de toit avant et un élément de toit arrière (4).

8. Toit rétractable selon l'une quelconque des revendications précédentes **caractérisé en ce que** la structure portante est constituée par deux bras latéraux (9, 10) réunis à l'arrière par au moins un élément transversal (11,12).

9. Toit rétractable selon la revendication 8 **caractérisé en ce que** les bras latéraux sont formés de deux tronçons articulés, les dits bras étant articulés sur l'élément de toit arrière.

10. Véhicule **caractérisé en ce qu'**il comprend un toit rétractable selon l'une quelconque des revendications précédentes.

11. Véhicule selon la revendication 10 **caractérisé en ce que** les dits sous ensembles motorisation/articulation sont montés sous les ailes (26) arrières et au dessus d'une cloison (27) définissant le passage de roue.

12. Véhicule selon la revendication 11 **caractérisé en ce que** le sous ensemble est disposé entre la cloison (27) définissant le passage de roue et un feu arrière.

13. Véhicule selon la revendication 11 ou 12 **caractérisé en ce que** le sous ensemble est logé dans une cavité de carrosserie sous l'aile arrière, cette cavité étant située entre le sommet et l'arrière du passage de roue.

14. Véhicule selon la revendication 11 ou 12 ou 13 **caractérisé en ce que** les dites platines de réception présentent une surface de réception située au voisinage de la ligne de caisse lorsque le toit couvre l'habitacle.

15. Procédé de montage d'un toit rétractable selon l'une quelconque des revendications 1 à 8 **caractérisé en ce qu'**on monte chaque sous ensemble (5) de motorisation/articulation depuis l'intérieur du coffre sur des parois de caisse situées sous les ailes arrières.

16. Procédé de montage d'un toit rétractable selon la revendication 15 **caractérisé en ce qu'**on assemble un ensemble constitué par une structure portante et les éléments (2,3,4) de toit couvrant la structure (6) portante et on fixe cet ensemble sur les sous ensembles (5) de motorisation./articulation préalablement montés sur la caisse du véhicule.

## Claims

1. Retractable roof *for a vehicle,* comprising a bearing structure (6) manoeuvred by driving/articulation means (5) located at the rear of the roof, the *said* driving/articulation means (5) being arranged in a righthand subassembly and a left-hand subassembly, the said subassemblies comprising means (13, 14) of fixing to the vehicle and reception plates (15, 16) for the bearing structure, these plates being able to move during the manoeuvring of the roof between a position covering the cabin and a stored position, this roof *being **characterised in that*** the bearing structure, which has for this purpose a support foot (17, 18) coming into contact with each movable plate, is rigidly fixed to the reception plates.

2. Retractable roof according to claim 1, **characterised in**
**that** the plates have a reception surface and the support foot has a support surface complementary to the reception surface of the plate.

3. Retractable roof according to claim 2, **characterised in that** the reception surfaces are substantially horizontal when the bearing structure is mounted.

4. Retractable roof according to claim 1 or 2 or 3, **characterised in that** each driving/articulation means (5) also comprises an actuator (V1, V2), a runner (G1, G2) in which there slides a finger (23) carried by the movable plate and a transmission (T1, T2) of the actuator.

5. Retractable roof according to claim 4, **characterised in that** the transmission comprises a link (19, 20) articulated with a roof element.

6. Retractable roof according to claim 5, **characterised in** the front end of the link (19, 20) is articulated on a shaft (21) presented by the plate.

7. Retractable roof according to any one of the preceding claims, **characterised in that** the roof comprises at least one front roof element and one rear roof element (4).

8. Retractable roof according to any one of the preceding claims, **characterised in that** the bearing structure is formed by two lateral arms (9, 10) joined at the rear by at least one transverse element (11, 12).

9. Retractable roof according to claim 8, **characterised in that** the lateral arms are formed by two articulated sections, the said arms being articulated on the rear roof element.

10. Vehicle, **characterised in that** it comprises a retractable roof according to any one of the preceding claims.

11. Vehicle according to claim 10, **characterised in that** the said driving/articulation subassemblies are mounted under the rear wings (26) and above a partition (27) defining the wheel arch.

12. Vehicle according to claim 11, **characterised in that** the subassembly is disposed between the partition (27) defining the wheel arch and a rear light.

13. Vehicle according to claim 11 or 12, **characterised in that** the subassembly is housed in a bodywork cavity under the rear wing, this cavity being situated between the top and rear of the wheel arch.

14. Vehicle according to claim 11 or 12 or 13, **characterised in that** the said reception plates have a reception surface situated in the vicinity of the bodywork line when the roof covers the cabin.

15. Method of mounting a retractable roof according to any one of claims 1 to 8, **characterised in that** each driving/articulation subassembly (5) is mounted from the inside of the boot on bodywork walls situated under the rear wings.

16. Method of mounting a retractable roof according to claim 15, **characterised in that** an assembly formed by a bearing structure and the roof elements (2, 3, 4) covering the bearing structure (6) is assembled and this assembly is fixed to the driving/articulation subassemblies (5) previously mounted on the vehicle body.

## Patentansprüche

1. Klappverdeck für ein Fahrzeug mit einer Tragstruktur (6), die durch Motor-/Gelenkmittel (5) betätigt wird, die an der Rückseite des Verdecks angeordnet sind, wobei die Motor-/Gelenkmittel (5) in einem rechten Modul und in einem linken Modul angeordnet sind, wobei die Module Mittel (13, 14) zum Befestigen am Fahrzeug und Platten (15, 16) zum Aufnehmen der Tragstruktur aufweisen, wobei die Platten bei Betätigen des Verdecks zwischen einer den Fahrzeuginnenraum überdeckenden Stellung und einer abgelegten Stellung beweglich sind, wobei das Verdeck **dadurch gekennzeichnet ist, dass** auf den Aufnahmeplatten die Tragstruktur starr befestigt ist, die hierzu einen Auflagefuß (17, 18) aufweist, der mit jeder beweglichen Platte in Kontakt gelangt.

2. Klappverdeck nach Anspruch 1, **dadurch gekennzeichnet, dass** die Platten eine Aufnahmefläche aufweisen und der Auflagefuß eine Auflagefläche aufweist, die zu der Aufnahmefläche der Platte komplementär ist.

3. Klappverdeck nach Anspruch 2, **dadurch gekennzeichnet, dass** die Aufnahmeflächen bei Montage der Tragstruktur im Wesentlichen waagerecht sind.

4. Klappverdeck nach Anspruch 1 oder 2 oder 3, **dadurch gekennzeichnet, dass** jedes Motor-/Gelenkmittel (5) ferner ein Stellelement (V1, V2), eine Gleitschiene (G1, G2), in er ein von der beweglichen Platte getragener Finger (23) gleitet, und einen Antrieb (T1, T2) des Stellelements umfasst.

5. Klappverdeck nach Anspruch 4, **dadurch gekennzeichnet, dass** der Antrieb eine an einem Dachelement angelenkte Schubstange (19, 20) umfasst.

6. Klappverdeck nach Anspruch 5, **dadurch gekennzeichnet, dass** das vordere Ende der Schubstange (19, 20) an einer Achse (21) angelenkt ist, die die Platte aufweist.

7. Klappverdeck nach einem der vorhergehenden Ansprüche, **dadurch gekennzeichnet, dass** das Verdeck wenigstens ein vorderes Dachelement und ein hinteres Dachelement (4) umfasst.

8. Klappverdeck nach einem der vorhergehenden Ansprüche, **dadurch gekennzeichnet, dass** die Tragstruktur von zwei Seitenarmen (9, 10) gebildet ist, die an der Rückseite durch wenigstens ein quer verlaufendes Element (11, 12) verbunden sind.

9. Klappverdeck nach Anspruch 8, **dadurch gekennzeichnet, dass** die Seitenarme von zwei angelenkten Abschnitten gebildet sind, wobei die Arme an dem hinteren Dachelement angelenkt sind.

10. Fahrzeug, **dadurch gekennzeichnet, dass** es ein Klappverdeck nach einem der vorhergehenden Ansprüche umfasst.

11. Fahrzeug nach Anspruch 10, **dadurch gekennzeichnet, dass** die Motor-/Gelenkmodule unter den hinteren Kotflügeln (26) und über einer den Radkasten bildenden Trennwand (27) angebracht sind.

12. Fahrzeug nach Anspruch 11, **dadurch gekennzeichnet, dass** das Modul zwischen der den Radkasten bildenden Trennwand (27) und einer Heckleuchte angeordnet ist.

13. Fahrzeug nach Anspruch 11 oder 12, **dadurch gekennzeichnet, dass** das Modul in einer Höhlung der Karosserie unter dem hinteren Kotflügel untergebracht ist, wobei diese Höhlung zwischen dem oberen Teil und dem hinteren Teil des Radkastens liegt.

14. Fahrzeug nach Anspruch 11 oder 12 oder 13, **dadurch gekennzeichnet, dass** die Aufnahmeplatten eine Aufnahmefläche aufweisen, die in der Nähe der Karosserielinie liegt, wenn das Verdeck den Fahrzeuginnenraum überdeckt.

15. Verfahren zur Montage eines Klappverdecks nach einem der Ansprüche 1 bis 8, **dadurch gekennzeichnet, dass** jedes Motor-/Gelenkmodul (5) von der Innenseite des Kofferraums aus an Karosseriewänden angebracht wird, die unter den hinteren Kotflügeln liegen.

16. Verfahren zur Montage eines Klappverdecks nach Anspruch 15, **dadurch gekennzeichnet, dass** eine Einheit zusammengebaut wird, die von einer Tragstruktur und den die Tragstruktur (6) bedeckenden Dachelementen (2, 3, 4) gebildet ist, und diese Einheit auf den Motor-/Gelenkmodulen (5) befestigt wird, die zuvor auf der Fahrzeugkarosserie angebracht wurden.
